**Europäisches Patentamt**

**European Patent Office**

**Office européen des brevets**

(19)

(11) Veröffentlichungsnummer: **0 053 271**
**B1**

(12) **EUROPÄISCHE PATENTSCHRIFT**

(45) Veröffentlichungstag der Patentschrift:
14.03.84

(51) Int. Cl.³: **C 01 B 25/30**

(21) Anmeldenummer: **81108769.1**

(22) Anmeldetag: **23.10.81**

(54) **Verfahren zur Herstellung wässriger Alkalimetallphosphatlösungen.**

(30) Priorität: **03.12.80 DE 3045558**

(43) Veröffentlichungstag der Anmeldung:
**09.06.82 Patentblatt 82/23**

(45) Bekanntmachung des Hinweises auf die Patenterteilung:
**14.03.84 Patentblatt 84/11**

(84) Benannte Vertragsstaaten:
**BE CH DE FR GB IT LI NL**

(56) Entgegenhaltungen:
**DE - A - 2 833 380**
**DE - A - 2 948 219**
**DE - C - 877 751**
**FR - A - 1 468 503**

**GMELINS "Handbuch der arnorganischen Chemie" 8. Auflage, Teil C "Phosphor" 1965, VERLAG CHEMIE, Weinheim/Bergstr. Seite 129**

(73) Patentinhaber: **HOECHST AKTIENGESELLSCHAFT, Postfach 80 03 20, D-6230 Frankfurt am Main 80 (DE)**

(72) Erfinder: **Jödden, Klaus, Dr., Alleestrasse 44, D-5030 Hürth (DE)**
Erfinder: **Heymer, Gero, Dr., Fasanenaue 12, D-5042 Erftstadt (DE)**

## Verfahren zur Herstellung wäßriger Alkalimetallphosphatlösungen

Die vorliegende Erfindung betrifft ein Verfahren zur Herstellung wäßriger Alkalimetallphosphatlösungen durch katalytische Oxidation von wäßrigen Alkalimetallphosphitlösungen.

Bei der Herstellung von Phosphorwasserstoff durch Disproportionierung von gelbem Phosphor in Natronlauge fallen zwangsweise erhebliche Mengen wäßriger Natriumphosphitlösungen an. So werden im Falle der Erzielung hoher $PH_3$-Ausbeuten etwa 65—75% des eingebrachten Phosphors in technisch bedeutungslose Verbindungen des dreiwertigen Phosphors umgewandelt, welche aus Kosten- und Umweltschutzgründen zu verwertbaren Produkten aufgearbeitet werden müssen.

Grundsätzlich besteht die Möglichkeit, Phosphitlösungen durch Aufsprühen auf Rohphosphat zur Herstellung von elementarem Phosphor zu nutzen. Diese Arbeitsweise stellt praktisch eine Entwertung der relativ reinen Phosphor-III-Verbindungen zum Rohphosphat dar. Außerdem ist es bekannt, das gelöste Phosphite pyrolytisch in feste Phosphate verschiedener Zusammensetzung überführt werden können. Ein weiteres in der DE-A-28 33 380 vorgeschlagenes Verfahren zur Nutzung von Abfallphosphitlösungen besteht in der Umwandlung von Natriumphosphit in phosphorige Säure durch Sättigung der wäßrigen Lösungen mit Chlorwasserstoff, wobei eine quantitative Ausfällung des Natriumions als NaCl erfolgt.

Aufgabe der vorliegenden Erfindung war es, Alkalimetallphosphite in wäßriger Lösung zu reinen Alkalimetallphosphaten zu oxidieren und so ein breites und problemloses Einsatzgebiet für Phosphitabfallösungen zu erschließen. Da Natriumphosphatlösungen nach anderen Verfahrensweisen in großtechnischen Mengen hergestellt werden, könnte man diesen die durch Oxidation von Phosphiten hergestellten Phosphatlösungen zumischen.

Es ist bekannt, daß die anorganischen Salze des dreiwertigen Phosphors, die eigentlich aufgrund ihres Redoxpotentials als starke Reduktionsmittel zu betrachten sind, gegenüber Oxidationsmitteln wie $H_2O_2$, Luft und Sauerstoff sehr beständig sind. Beispielsweise werden gemäß Gmelins Handbuch der anorganischen Chemie, 8. Auflage, Band Phosphor, Teil C (1965) Seite 129 beim Durchleiten von Luft durch wäßrige $H_3PO_3$ bei 90°C nach 3 Std. höchstens 4% der $H_3PO_3$ zu $H_3PO_4$ oxidiert, wobei feinverteiltes Pt die Oxidation nicht beschleunigt. Auch mit $H_2O_2$ wird phosphorige Säure nach eigenen Versuchen nur langsam und unvollständig in der Siedehitze oxidiert. Andererseits geht aus der zitierten Literaturstelle in Gmelins Handbuch hervor, daß in Gegenwart von feinverteiltem Palladium und $O_2$-Atmosphäre rasche Oxidation von $H_3PO_3$ erfolgt. Hierzu sind allerdings relativ große Mengen Pd von 70 Gew%, bezogen auf die $H_3PO_3$-Menge erforderlich.

Es wurde nunmehr gefunden, daß die Oxidation von Verbindungen des dreiwertigen Phosphors, gelöst in Wasser, mit Sauerstoff in Gegenwart eines Katalysators aus porösem Aluminiumsilikatmaterial erheblich beschleunigt werden kann. Beispielsweise waren bei einer Lösung, die 3,8% P(III) und 8,2% P(V) enthielt, in Gegenwart des Katalysatorträgers (200 g Lösung, pH=2, 60 g Katalysator KA, 95°C, 20 l/h $O_2$) 30% des dreiwertigen in fünfwertigen Phosphor überführt worden. Ohne Aluminiumsilikatkontakt erfolgt unter diesen Bedingungen keine merkliche Oxidation.

Die Erfindung betrifft somit ein Verfahren zur Herstellung von wäßrigen Alkalimetallphosphatlösungen durch katalytische Oxidation von wäßrigen Alkalimetallphosphitlösungen mit Sauerstoff oder Luft, welches dadurch gekennzeichnet ist, daß man in die wäßrige Alkalimetallphosphitlösung oder in eine wäßrige Lösung von Alkalimetallphosphiten und Alkalimetallphosphaten mit einer Temperatur von 30 bis 110°C (vorzugsweise 70 bis 100°C) und einem pH-Wert von Null bis 8 (vorzugsweise 1 bis 5) in Gegenwart eines Katalysators aus $SiO_2$ oder Aluminiumsilikat mit einem $Al_2O_3$-Anteil von höchstens 10 Gew%, wobei das $SiO_2$ oder das Aluminiumsilikat gegebenenfalls mit feinverteiltem Palladium belegt sein kann, Sauerstoff oder Luft in stöchiometrischem Überschuß bis zur maximalen Umsetzung des Alkalimetallphosphits zu Alkalimetallphosphat einleitet, und daß man nach Beendigung der Oxidation die wäßrige Lösung vom Katalysator abtrennt.

Als Ausgangsprodukt werden vorzugsweise technische Alkalimetallphosphitlösungen, welche als Nebenprodukt bei der Herstellung von Phosphorwasserstoff durch Disproportionierung von gelbem Phosphor in Natronlauge anfallen und einen pH-Wert von 8 bis 14 besitzen, verwendet. Die Einstellung des vorteilhaften pH-Wertes kann gegebenenfalls durch Zusatz einer Mineralsäure, wie Phosphorsäure, zu der Phosphitlösung erfolgen. Es hat sich weiterhin als vorteilhaft erwiesen, das $SiO_2$ bzw. Aluminiumsilikat in Form von porösen Pellets einzusetzen.

Zur Durchführung des Verfahrens der Erfindung erwies sich ein Aluminiumsilikatkatalysator der Firma Südchemie AG, München, mit der Bezeichnung Katalysatorträger KA-1, KA-2, KA-3 oder KA-4 besonders geeignet. Die Wirkung dieses Katalysators wird durch Aufbringen von feinverteiltem Palladium auf die Oberfläche des Aluminiumsilikates, welches die Form von Pellets haben kann, wesentlich gesteigert. Die Palladiumkonzentration auf dem $SiO_2$ bzw. Aluminiumsilikat soll höchstens 5 Gew%, insbesondere 0,01 bis 1,0 Gew%, betragen. Bei Pd-Gehalten oberhalb 0,05 Gew% ist die Oxidationsgeschwindigkeit des Phosphits praktisch unabhängig von der auf dem Trägermaterial aufgebrachten Pd-Menge. Bei Verwendung des vorbeschriebenen Katalysators, welcher im allgemeinen in einer Menge von etwa 500 bis 5000 g pro Liter Phosphitlösung eingesetzt wird, ist die Oxidation des Phosphits, welche vorzugsweise bei einer Temperatur von 80 bis 100°C durchgeführt wird, nach Ablauf von 7 bis 12 Stunden beendet.

Das Verfahren der Erfindung ist als technisch fortschrittlich zu bezeichnen, da es die katalytische Oxidation von Alkalimetallphosphiten zu Alkalimetallphosphaten in wäßriger Lösung unter Verwendung eines wirtschaftlich billigen Aluminiumsilikatkatalysators ermöglicht. Bei Zusatz von Palladium, dessen katalytische Wirksamkeit bei der Oxidation von Phosphiten bereits bekannt ist, zum Aluminiumsilikatkatalysator wird eine beachtliche Verstärkung der Katalysatoraktivität erzielt, wobei die erforderliche Menge des Edelmetalles wesentlich geringer ist als bei alleiniger Verwendung von Palladium.

## Beispiel 1

### A) Herstellung des Palladium/Aluminiumsilikat-Katalysators

Zur Herstellung des Palladium/Aluminiumsilikat-Katalysators wurde ein handelsübliches Produkt mit der Bezeichnung Katalysatorträger KA-1 der Firma Südchemie AG, München, eingesetzt. Das Aluminiumsilikat besaß folgende Merkmale:

a) Durchmesser der Pellets: 5 mm
b) Schüttgewicht: 530 g/l
c) Zusammensetzung des Silikates: 91,1 Gew% $SiO_2$, 1,8 Gew% $Al_2O_3$
d) Röntgenbeugungsdiagramm des Silikates: sehr starker Peak bei $\vartheta = 13,38$

Die d-Werte und relativen Intensitäten des Produktes KA-1 (Cu $K_\alpha$-Strahlung) sind in der nachfolgenden Tabelle dargestellt:

| d | relat. Intensität |
| --- | --- |
| 9,8 | 2 |
| 4,94 | 1 |
| 4,23 | 3 |
| 3,33 | 10 |
| 2,57 | 1 |
| 2,45 | 1 |
| 2,27 | 1 |
| 2,23 | 1 |
| 2,13 | 1 |
| 1,99 | 1 |
| 1,82 | 1 |

100 g des Aluminiumsilikates, das ein Wasseraufnahmevermögen von 65 cm³/100 g aufwies, wurden mit 13,3 g 20gew%iger $PdCl_2$-Lösung, welche mit 126 ml Wasser verdünnt wurde, eine halbe Stunde bei 40°C getränkt. Anschließend wurde die überschüssige Lösung von den Aluminiumsilikat-Pellets dekantiert, die Pellets bei 110°C getrocknet und das auf den Pellets adsorbierte $PdCl_2$ mit 10gew%iger wäßriger Hydrazinlösung, der 4 Gew% NaOH zugefügt waren, bei 40°C reduziert. Der Katalysator wurde mit Wasser gewaschen und bei 110°C getrocknet.

### B) Oxidation von Mononatriumphosphit in wäßriger Lösung in Gegenwart des gemäß A) hergestellten Katalysators

Ein mit einer D1-Fritte verschlossenes Glasrohr wurde mit 50 g des gemäß A) hergestellten Katalysators gefüllt und der Katalysator mit 200 g einer wäßrigen, 15,8gew%igen Lösung von $NaH_2PO_3$, welche auf 95°C erhitzt war, überschichtet. Der Pd-Gehalt des Katalysators betrug 0,8 Gew%. Durch die Fritte wurden stündlich 20 Liter Sauerstoff in die wäßrige Lösung eingeleitet und das $NaH_2PO_3$ oxidiert. Der pH-Wert der Lösung betrug 2,0.

Nach 8 Stunden war die Umsetzung des Phosphits zu primärem Natriumphosphat vollkommen.

0 053 271

## Beispiel 2

Es wurde analog Beispiel 1 verfahren, wobei jedoch 200 g einer wäßrigen Natriumphosphit/Natriumphosphat-Lösung mit einem P-(III)-Gehalt von 4,1 Gew% und einem P-(V)-Gehalt von 6,3 Gew% sowie einem pH-Wert von 4,2 eingesetzt wurden. Die zeitliche Abnahme des Phosphitgehaltes, berechnet als P-(III), geht aus der folgenden Tabelle hervor:

| Stunden | 0 | 2 | 4 | 6 | 8 | 10 |
|---|---|---|---|---|---|---|
| Gew% P-(III), bezogen auf Gesamt-P-Gehalt | 39,4 | 32,8 | 27,8 | 15,2 | 5,4 | 0 |

## Beispiel 3

Es wurde analog Beispiel 1 verfahren, wobei jedoch 200 g einer wäßrigen Natriumphosphit/Natriumphosphat-Lösung mit einem P-(III)-Gehalt von 4,0 Gew% und einem P-(V)-Gehalt von 2,4 Gew% sowie einem pH-Wert von 6,5 eingesetzt wurden. Die Katalysatormenge betrug 60 g.
Der Phosphitanteil, berechnet als P-(III), nahm hierbei wie folgt ab:

| Stunden | 0 | 2 | 4 | 6 | 8 | 10 |
|---|---|---|---|---|---|---|
| Gew% P-(III), bezogen auf Gesamt-P-Gehalt | 62,5 | 49,7 | 40,8 | 33,0 | 28,1 | 22,8 |

## Beispiel 4

Es wurde analog Beispiel 1 verfahren, wobei jedoch 200 g einer wäßrigen Natriumphosphit/Natriumphosphat-Lösung mit einem P-(III)-Gehalt von 3,75 Gew% und einem P-(V)-Gehalt von 8,2 Gew% sowie einem pH-Wert von 2,0 eingesetzt wurden. Es wurden als Katalysator 50 g Pd-freies Produkt der Bezeichnung Katalysatorträger KA-1 verwendet. Der P-(III)-Anteil des Gesamt-P-Gehaltes war nach 10 Stunden von 31,4 auf 20 Gew% gesunken.

## Beispiel 5

Es wurde analog Beispiel 4 verfahren, wobei jedoch als Katalysator 50 g Pd-freies handelsübliches Molekularsieb der Porenweite 5 Å (0,5 nm) der Firma Merck AG, Darmstadt, welches ein Si/Al-Verhältnis von etwa 1,1 aufweist, verwendet wurde. Der P-(III)-Anteil des Gesamt-P-Gehaltes war nach 10 Stunden von 31,4 auf 18 Gew% gesunken.

## Beispiel 6

200 g einer Lösung der gleichen Zusammensetzung wie in Beispiel 4 wurden in Gegenwart von 50 g Katalysator, der 0,1 Gew% Pd enthielt, bei 95°C mit 20 l/h Luft begast. Dabei nahm der P-(III)-Anteil wie folgt ab:

| Stunden | 0 | 2 | 4 | 6 | 8 | 10 |
|---|---|---|---|---|---|---|
| Gew% P-(III), bezogen auf Gesamt-P-Gehalt | 31,4 | 25,0 | 19,3 | 15,8 | 9,6 | 0 |

## Beispiel 7

2,2 kg einer wäßrigen Natriumphosphit/Natriumphosphat-Lösung, die 4,1 Gew% P-(III) und 6,3 Gew% P-(V) enthielt, wurden unter ständigem Umpumpen (Pumpleistung 54 l/h) in einem Rieselreaktor, der mit 550 g Katalysator gefüllt war und im Gleichstrom mit 100 l/h Luft beaufschlagt wurde, bei pH=4,0 und 88°C zur Reaktion gebracht. Der Katalysator bestand aus Aluminiumsilikat, wie in Beispiel 1 beschrieben, und war mit 0,1 Gew% Pd dotiert. Unter diesen Bedingungen nahm der P-(III)-Gehalt wie folgt ab:

4

| Stunden | 0 | 2 | 4 | 6 | 8 | 10 | 12 |
|---|---|---|---|---|---|---|---|
| Gew% P-(III), bezogen auf Gesamt-P-Gehalt | 39,4 | 22,9 | 15,7 | 11,1 | 5,2 | 2,7 | 0,4 |

Beispiel 8

Der Versuch in Beispiel 7 wurde unter Verdoppelung der Katalysatormenge wiederholt. Nach 7 Stunden war eine vollständige Oxidation erreicht.

**Patentansprüche**

1. Verfahren zur Herstellung von wäßrigen Alkalimetallphosphatlösungen durch katalytische Oxidation von wäßrigen Alkalimetallphosphitlösungen mit Sauerstoff oder Luft, dadurch gekennzeichnet, daß man in die wäßrige Alkalimetallphosphitlösung oder in eine wäßrige Lösung von Alkalimetallphosphiten und Alkalimetallphosphaten mit einer Temperatur von 30 bis 110°C und einem pH-Wert von Null bis 8 in Gegenwart von $SiO_2$ oder Aluminiumsilikat mit einem $Al_2O_3$-Anteil von höchstens 10 Gew%, wobei das $SiO_2$ oder das Aluminiumsilikat gegebenenfalls mit feinverteiltem Palladium belegt sein kann, Sauerstoff oder Luft in stöchiometrischem Überschuß bis zur maximalen Umsetzung des Alkalimetallphosphits zu Alkalimetallphosphat einleitet, und daß man nach Beendigung der Oxidation die wäßrige Lösung vom Katalysator abtrennt.

2. Verfahren nach Anspruch 1, dadurch gekennzeichnet, daß man technische Alkalimetallphosphitlösungen, welche als Nebenprodukt bei der Herstellung von Phosphorwasserstoff durch Disproportionierung von gelbem Phosphor in Natronlauge anfallen und einen pH-Wert von 8 bis 14 besitzen, einsetzt.

3. Verfahren nach Anspruch 1 oder 2, dadurch gekennzeichnet, daß man die Umsetzung der Alkalimetallphosphite bei einer Temperatur von 70 bis 100°C und einem pH-Wert der wäßrigen Lösung von 1 bis 5 durchführt.

4. Verfahren nach Anspruch 1 bis 3, dadurch gekennzeichnet, daß das $SiO_2$ oder Aluminiumsilikat in Form von Pellets eingesetzt wird.

5. Verfahren nach Anspruch 1 bis 4, dadurch gekennzeichnet, daß man ein Aluminiumsilikat in Form von Pellets mit einem mittleren Durchmesser von 5 mm, einem Schüttgewicht von 530 g/l sowie einem Wasseraufnahmevermögen von 65 ml/100 g einsetzt, wobei das Aluminiumsilikat 91,1 Gew% $SiO_2$ und 1,8 Gew% $Al_2O_3$ enthält und im Röntgenbeugungsdiagramm einen starken Peak bei $\vartheta = 13,38$ aufweist.

6. Verfahren nach Anspruch 1 bis 5, dadurch gekennzeichnet, daß die Palladiumkonzentration auf dem $SiO_2$ bzw. Aluminiumsilikat höchstens 5,0 Gew%, insbesondere 0,01 bis 1,0 Gew%, beträgt.

7. Verfahren nach Anspruch 1 bis 6, dadurch gekennzeichnet, daß man Katalysator und Phosphit- bzw. Phosphit/Phosphatlösung in einem Mengenverhältnis von 500 bis 5000 g Katalysator pro Liter Lösung in Kontakt bringt.

**Claims**

1. Process for making aqueous alkali metal phosphate solutions by subjecting aqueous alkali metal phosphite solutions to catalytic oxidation with oxygen or air, wherein oxygen or air in stoichiometric excess is introduced into the aqueous alkali metal phosphite solution or into an aqueous solution of alkali metal phosphites and alkali metal phosphates having a temperature of about 30 to 110°C and a pH-value of 0 to 8, in the presence of $SiO_2$ or aluminosilicate containing at most 10 weight % of $Al_2O_3$, the $SiO_2$ or alumino-silicate having optionally finely divided palladium applied thereto, for as long as necessary to achieve maximum conversion of the alkali metal phosphite to alkali metal phosphate and, after completion of the oxidation, the aqueous solution is separated from the catalyst.

2. Process as claimed in claim 1, wherein commercial alkali metal phosphite solutions which are obtained as by-products in the production of hydrogen phosphide by subjecting yellow phosphorus to a disproportionation reaction in sodium hydroxide solution, and have a pH-value within the range 8 to 14 are used.

3. Process as claimed in claim 1 or 2, wherein the alkali metal phosphites are reacted at a temperature of 70 to 100°C and at a pH-value of the aqueous solution of 1 to 5.

4. Process as claimed in claims 1 to 3, wherein the $SiO_2$ or alumino-silicate is used in the form of pellets.

5. Process as claimed in claims 1 to 4, wherein the aluminosilicate is used in the form of pellets which have an average diameter of 5 mm, an apparent density of 530 g/l, and a water absorptive power of 65 ml/100 g, the alumino-silicate containing 91.1 weight % $SiO_2$ and 1.8 weight % $Al_2O_3$, and presenting

a strong peak at $\vartheta = 13.38$ in the X-ray diffraction diagram.

6. Process as claimed in claims 1 to 5, wherein the palladium concentration on the $SiO_2$ or aluminosilicate is at most 5.0 weight %, preferably 0.01 to 1.0 weight %.

7. Process as claimed in claims 1 to 6, wherein the catalyst and phosphite or phosphite/phosphate solution are contacted with one another in a quantitative ratio of 500 to 5000 g catalyst per liter solution.

**Revendications**

1. Procédé de préparation de solutions aqueuses de phosphates de métaux alcalins par oxydation catalytique de solutions aqueuses de phosphites de métaux alcalins par l'oxygène ou l'air, caractérisé en ce que l'on introduit de l'oxygène ou de l'air en excès stoechiométrique dans la solution aqueuse de phosphite de métal alcalin ou dans une solution de phosphites de métaux alcalins et de phosphates de métaux alcalins ayant une température de 30 à 110°C et un pH de zéro à 8 en présence de $SiO_2$ ou de silicate d'aluminium contenant au plus 10% en poids de $Al_2O_3$, le $SiO_2$ ou le silicate d'aluminium pouvant éventuellement être recouvert de palladium finement divisé jusqu'à la conversion maximale du phosphite de métal alcalin en phosphate de métal alcalin et en ce que, après la fin de l'oxydation, on sépare la solution aqueuse du catalyseur.

2. Procédé selon la revendication 1, caractérisé en ce que l'on utilise des solutions de phosphites de métaux alcalins du commerce qui se forment comme sous-produits dans la fabrication de l'hydrogène phosphoré par dismutation du phosphore blanc dans une lessive de soude et présentant un pH de 8 à 14.

3. Procédé selon la revendication 1 ou 2, caractérisé en ce que l'on effectue la réaction des phosphites de métaux alcalins à une temperature de 70 à 100°C et un pH de la solution aqueuse de 1 à 5.

4. Procédé selon les revendications 1 à 3, caractérisé en ce que l'on utilise le $SiO_2$ ou le silicate d'aluminium sous forme de pastilles.

5. Procédé selon les revendications 1 à 4, caractérisé en ce que l'on utilise un silicate d'aluminium sous forme de pastilles présentant un diamètre moyen de 5 mm, une densité apparente de 530 g/l ainsi qu'un pouvoir d'absorption de l'eau de 65 ml/100 g, le silicate d'aluminium contenant 91,1% en poids de $SiO_2$ et 1,8% en poids de $Al_2O_3$ et présentant dans le diagramme de diffraction des rayons X un pic fort à $\theta = 13,38$.

6. Procédé selon les revendications 1 à 5, caractérisé en ce que la concentration de palladium sur le $SiO_2$ ou silicate d'aluminium est d'au plus 5,0% en poids, en particulier de 0,01 à 1,0% en poids.

7. Procédé selon les revendications 1 à 6, caractérisé en ce que l'on met en contact le catalyseur et la solution de phosphite ou de phosphite/phosphate dans un rapport pondéral de 500 à 5000 g de catalyseur par litre de solution.